# EUROPEAN PATENT APPLICATION

(11) **EP 1 990 946 A2**
(43) Date of publication of application: **12.11.2008**
(21) Application number: 08008597.0
(22) Date of filing: 07.05.2008
(51) Int. Cl.: H04L 1/18

(54) **Method and apparatus of improving reset of evolved media access control protocol entity in a wireless communication system**

(30) Priority: 07.05.2007 US 916546 P
(71) Applicant: Innovative Sonic Limited, Tortola (VG)
(72) Inventor: Tseng, Li Chih, Taipei City, Taiwan (TW)
(74) Representative: Schaeberle, Steffen

(57) **Abstract**

A method of improving reset of an evolved media access control (MAC-ehs) protocol entity for a user equipment of a wireless communications system is disclosed. The MAC-ehs entity includes a plurality of reordering queues and a plurality of reassembly entities. The method includes receiving a reset request for resetting the MAC-ehs entity (302), delivering all reordering packet data units (PDUs) stored in the plurality of reordering queues to the corresponding reassembly entities for performing a reassembly process to deliver complete upper layer PDUs to an upper layer entity (304), and discarding all PDU segments still existing in the plurality of reassembly entities (306).

## Description

This application claims the benefit of U.S. Provisional Application No. 60916546, filed on MAY 07, 2007 and entitled "Method and Apparatus for allocating HARQ configuration and concatenation and delivery of MAC PDUs".

The present invention relates to a method and apparatus for improving reset of an evolved media access control, named MAC-ehs hereinafter, protocol entity in a user equipment of a wireless communications system according to the pre-characterizing clauses of claims 1 and 7.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates.

In the prior art, lengths of all Protocol Data Units (PDUs) outputted from a Radio Link Control (RLC) layer are the same. However, this decreases bandwidth utility rate and data processing efficiency, especially for high data rate applications, such as High Speed Downlink Package Access (HSDPA) and High Speed Uplink Package Access (HSUPA) in the 3G mobile telecommunications system. Thus, targeting high data rate applications, the 3rd Generation Partnership Project (3GPP) makes some modifications for RLC and Media Access Control (MAC) layers, which primarily includes adopting flexible RLC PDU sizes and providing PDU segmentation/reassembly in the MAC layer, to enhance bandwidth utility rate and data processing efficiency, thereby making high data rate enabled by physical layer features such as Multi-input Multi-output (MIMO) and high order modulations possible.

In such a situation, the 3GPP newly introduces a MAC-ehs protocol entity in the MAC layer, which allows the support of flexible RLC PDU sizes as well as MAC segmentation/reassembly. Furthermore, unlike MAC-hs for HSDPA, MAC-ehs allows multiplexing of data from several priority queues within one transmission time interval (TTI) of 2 ms. Detailed operations of the MAC-ehs entity can be found in the MAC protocol specification formulated by the 3GPP, and are not narrated herein.

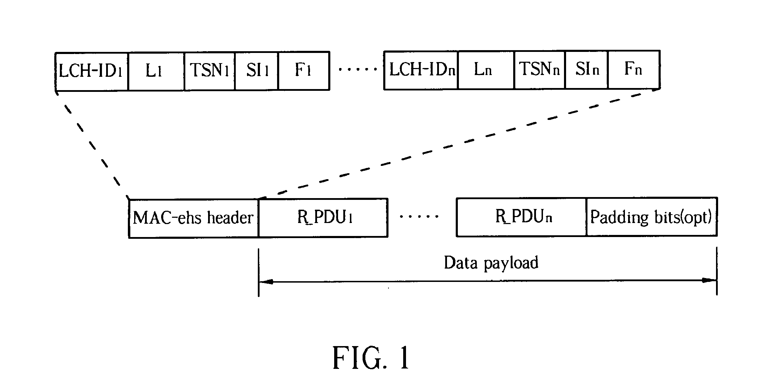

Please refer to FIG.1, which illustrates a schematic diagram of a MAC-ehs PDU. The MAC-ehs PDU consists of a plurality of reordering PDUs R_PDUₙ and a corresponding MAC-ehs header. Each reordering PDU consists of at least one consecutive MAC-ehs Serving Data Unit (SDUs) or segments of MAC-ehs SDUs belonging to the same priority queue, or reordering queue. A MAC-ehs SDU, i.e. an upper layer PDU, is either a MAC-c PDU or a MAC-d PDU. For each reordering PDU, the MAC-ehs header carries a Logical channel identifier (LCH-ID) field LCH-IDₙ, a Length field Lₙ, a Transmission Sequence Number (TSN) field TSNₙ, a Segmentation Indication (SI) field SIₙ, and a header extension field Fₙ. The LCH-ID field LCH-IDₙ indicates a priority queue for each reordering PDU, wherein the mapping between the logic channel and the priority/reordering queue is provided by upper layers. The Length field Lₙ indicates data length of each reordering PDU. The TSN field TSNₙ indicates a TSN of each reordering PDU for reordering purpose. The SI field Siₙ indicates whether MAC-ehs SDUs included in each reordering PDU are segmented and segmentation type of the reordering PDU for reassembly. The header extension field Fₙ then indicates whether there exists a next reordering PDU in the following.

Thus, when a MAC-ehs PDU is received by the UE, each reordering PDU is firstly assigned to a corresponding reordering queue for reordering according to the LCH-ID field LCH-IDₙ and the TSN field TSNₙ. In each reordering queue, if the latest received reordering PDU is determined to be consecutive to a previously stored segment of a MAC-ehs SDU, the reordering PDU shall be further concatenated with the previously stored segment of the MAC-ehs SDU according to the SI field SIₙ, so that complete MAC-ehs SDUs can be delivered to upper layers.

In the prior art, the UE is required by upper layers to perform a MAC-ehs reset procedure for resetting the MAC-ehs protocol entity in some situations. The MAC-ehs reset procedure includes the following steps: Flushing soft buffers for all configured Hybrid Automatic Repeat Request (HARQ) processes; stopping all active reordering release timers and setting all timers to their initial values; starting transmission sequence numbers (TSNs) with value 0 for a next transmission of each configured HARQ process; defining an initial range of a receiver window; delivering all reordering PDUs in each reordering buffer to a corresponding reassembly protocol entity; and flushing the reordering buffer.

By the reassembly protocol entity, all reordering PDUs in each reordering queue are reassembled with previously stored PDU segments for further delivering complete PDUs to upper layers. However, when the MAC-ehs reset procedure is performed, operation of discarding PDU segments still existing in the reassembly entity is not executed. In this situation, after resetting the MAC-ehs protocol entity, later-received reordering PDUs may be incorrectly concatenated with the stored PDU segments in the reassembly entity, resulting in a data error of the UE.

This in mind, the present invention aims at providing a method and apparatus for resetting the MAC-ehs protocol entity by correctly discarding previously stored packet data unit segments in a user equipment of a wireless communications system.

This is achieved by a method and apparatus for improving reset of a MAC-ehs protocol entity in a user equipment of a wireless communications system according to the pre-characterizing clauses of claims 1 and 7. The dependent claims pertain to corresponding further developments and improvements.

As will be seen more clearly from the detailed description following below, the claimed method for improving reset of a MAC-ehs protocol entity in a user equipment of a wireless communications system is disclosed. The MAC-ehs protocol entity comprises a plurality of reordering queues and a plurality of reassembly protocol entities. The method includes steps of receiving a reset request for resetting the MAC-ehs protocol entity; delivering all reordering Packet Data Units, named PDUs hereinafter, stored in the plurality of reordering queues to the plurality of reassembly protocol entities for reassembly and delivering complete upper layer PDUs to a upper layer protocol entity; and discarding all PDU segments still existing in the plurality of reassembly entities.

In the following, the invention is further illustrated by way of example, taking reference to the accompanying drawings. Thereof
FIG. 1 illustrates a schematic diagram of a MAC-ehs PDU.
FIG.2 is a functional block diagram of a communications device.
FIG.3 is a schematic diagram of the program code in FIG.2.
FIG.4 is a schematic diagram of a process according to an embodiment of the present invention.

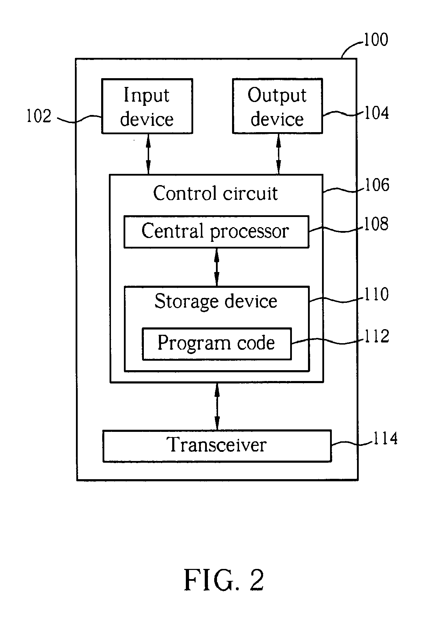

Please refer to FIG.2, which is a functional block diagram of a communications device 100. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

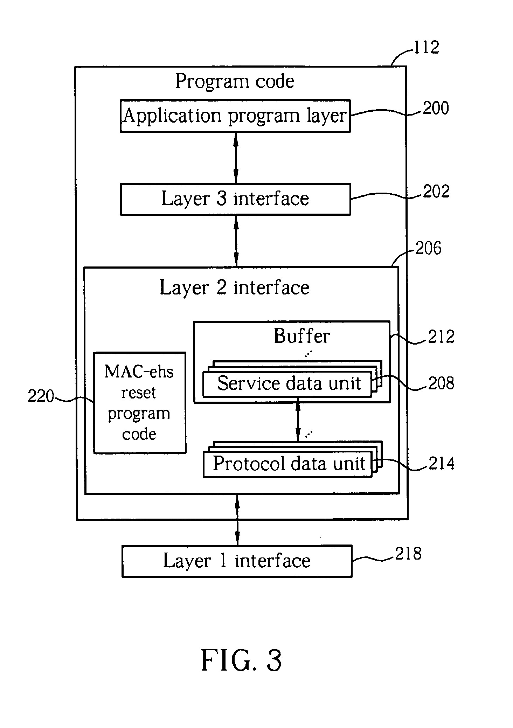

Please further refer to FIG.3, which is a schematic diagram of the program code 112 in FIG.2. The program code 112 comprises an application program layer 200, a layer 3 interface 202, a layer 2 interface 206, and a layer 1 interface 218. When transmitting signals, the layer 3 interface 202 submits Service Data Units (SDUs) 208 to the layer 2 interface 206 and the layer 2 interface 206 stores the SDUs 208 in a buffer 212. Then, the layer 2 interface 206 generates a plurality of PDUs 214 according to the SDUs 208 stored in the buffer 212 and outputs the PDUs 214 generated to a destination through the layer 1 interface 218. Conversely, when receiving a radio signal, the radio signal is received through the layer 1 interface 218 and the layer 1 interface 218 outputs PDUs 214 to the layer 2 interface 206. The layer interface 206 restores the PDUs 214 to SDUs 208 and stores the SDUs 208 in the buffer 212. At last, the layer 2 interface 206 transmits the SDUs 208 stored in the buffer 212 to the layer 3 interface 202. Preferably, the communications device 100 is applied in an Evolved High Speed Packed Access (Evolved HSPA) system, such that the layer 2 interface 206 can be a MAC-ehs interface utilized for handling MAC-ehs PDUs.

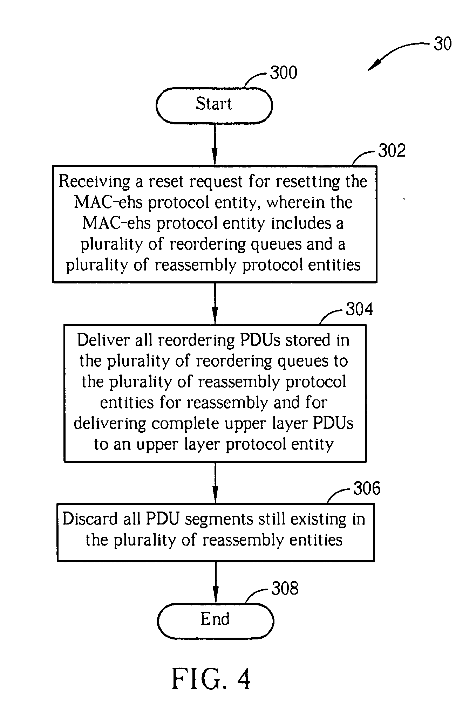

In some situations, the communications device 100 is required to perform a MAC-ehs reset procedure for resetting the MAC-ehs protocol entity according to a reset request generated by upper layers. Thus, the embodiment of the present invention provides a MAC-ehs reset program code 220 in the program code 112 utilized for correctly resetting the MAC-ehs protocol entity, so as to avoid incorrect PDUs being generated and delivered to upper layers. Please refer to FIG.4, which illustrates a schematic diagram of a process 30 according to an embodiment of the present invention. The process 30 is utilized for improving reset of a MAC-ehs protocol entity in a user equipment of a wireless communications system, and can be compiled into the MAC-ehs reset program code 220. The process 30 includes the following steps:

| | |
|---|---|
| Step300: | Start. |
| Step302: | Receiving a reset request for resetting the MAC-ehs protocol entity, wherein the MAC-ehs protocol entity includes a plurality of reordering queues and a plurality of reassembly protocol entities. |
| Step304: | Deliver all reordering PDUs stored in the plurality of reordering queues to the plurality of reassembly protocol entities for reassembly and for delivering complete upper layer PDUs to an upper layer protocol entity. |
| Step306: | Discard all PDU segments still existing in the plurality of reassembly entities. |
| Step308: | End. |

According to the process 30, when the reset of the MAC-ehs protocol entity is performed, all reordering PDUs stored in the plurality of reordering queues shall be delivered to the plurality of reassembly protocol entities for reassembly, so as to deliver complete upper layer PDUs to an upper layer protocol entity, such as to corresponding logic channels through a demultiplexing entity. Finally, all PDU segments still existing in the plurality of reassembly entities are discarded in the embodiment of the present invention.

Therefore, after resetting the MAC-ehs protocol entity, no previously stored PDU segments exist in the plurality of reassembly protocol entities, so that occurrence of a data error generated by incorrect concatenation can be avoided.

Certainly, in the embodiment of the present invention, the process 30 can further includes steps of: flushing soft buffers for all configured Hybrid Automatic Repeat Request (HARQ) processes, stopping all active reordering release timers and setting all timers to their initial values, starting transmission sequence numbers (TSNs) with value 0 for a next transmission of each configure HARQ process, defining an initial range of a receiver window, delivering all reordering PDUs in each reordering buffer to a corresponding reassembly protocol entity, and flushing the reordering buffer, which are well known by those skilled in the art and not narrated herein.

As mentioned above, when resetting the MAC-ehs protocol entity, the embodiment of the present invention discards all stored PDU segments in the reassembly entities, so as to avoid a data error of the UE due to incorrect concatenation.

## Claims

1. A method for improving reset of an evolved media access control, named MAC-ehs hereinafter, protocol entity in a user equipment of a wireless communications system, the MAC-ehs protocol entity comprising a plurality of reordering queues and a plurality of reassembly protocol entities, the method comprising:
receiving a reset request for resetting the MAC-ehs protocol entity (302); delivering all reordering Packet Data Units, named PDUs hereinafter, stored in the plurality of reordering queues to the plurality of reassembly protocol entities for reassembly and delivering complete upper layer PDUs to an upper layer protocol entity (304); and
**characterized by** discarding all PDU segments still existing in the plurality of reassembly entities (306).

2. The method of claim 1, **characterized in that** the reset request is generated by an upper layer protocol entity.

3. The method of claim 1, **characterized in that** each reordering PDU stored in the plurality of reordering queues is carried in a MAC-ehs PDU, and comprises at least one PDU or PDU segment.

4. The method of claim 3, **characterized in that** the MAC-ehs PDU is received by the MAC-ehs protocol entity.

5. The method of claim 3, **characterized in that** the at least one PDU comprises a MAC-ehs serving data unit, named MAC-ehs SDU, MAC-d PDU or MAC-c PDU.

6. The method of claim 1, **characterized in that** the wireless communications system is an Evolved High Speed Packet Access system.

7. A communications device (100) used in a wireless communications system for improving reset of an evolved media control access, named MAC-ehs hereinafter, protocol entity, the MAC-ehs protocol entity comprising a plurality of reordering queues and a plurality of reassembly protocol entities, the communications device (100) comprising:
a control circuit (106) for realizing functions of the communications device (100);
a central processing unit (108) installed in the control circuit (106) for executing a program code (112) to operate the control circuit (106); and
a memory (110) coupled to the central processing unit (108) for storing the program code (112);
wherein the program code (112) comprises:
receiving a reset request for resetting the MAC-ehs protocol entity (302);
delivering all reordering Packet Data Units, named PDUs hereinafter, stored in the plurality of reordering queues to the plurality of reassembly protocol entities for reassembly and delivering complete upper layer PDUs to an upper layer protocol entity (304); and
**characterized by** discarding all PDU segments still existing in the plurality of reassembly entities (306).

8. The communications device (100) claim 7, **characterized in that** the reset request is generated by an upper layer protocol entity.

9. The communications device (100) of claim 7, **characterized in that** each reordering PDU stored in the plurality of reordering queues is carried in a MAC-ehs PDU, and comprises at least one PDU or PDU segment.

10. The communications device (100) of claim 9, **characterized in that** the MAC-ehs PDU is received by the MAC-ehs protocol entity.

11. The communications device (100) of claim 9, **characterized in that** the at least one PDU comprises a MAC-ehs serving data unit, named MAC-ehs SDU, MAC-d PDU or MAC-c PDU.

12. The communications device (100) of claim 7, **characterized in that** the wireless communications system is an Evolved High Speed Packet Access system.
